Europäisches Patentamt

European Patent Office

Office européen des brevets

(11) Publication number: **0 321 022**
**A1**

## (12) EUROPEAN PATENT APPLICATION

(21) Application number: **88202780.8**

(22) Date of filing: **05.12.88**

(51) Int. Cl.⁴: **F16D 3/42 , F16D 3/28 , B62D 1/16**

(30) Priority: **15.12.87 NL 8703033**

(43) Date of publication of application:
**21.06.89 Bulletin 89/25**

(84) Designated Contracting States:
**DE ES FR GB IT NL**

(71) Applicant: SKF Industrial Trading &
Development Co, B.V.
Kelvinbaan 16
NL-3439 MT Nieuwegein(NL)

(72) Inventor: Kapaan, Hendrikus Jan
Waterhoen 5
Nieuwegein(NL)

(74) Representative: Merkelbach, B.
SKF Engineering & Research Centre B.V.
P.O. Box 2350
NL-3430 DT Nieuwegein(NL)

(54) **Coupling.**

(57) A universal joint, especially for a vehicle steering column, comprising an annular housing (8) with an outer ring (9) encircling an inner ring (10) of different material, with sockets pivotally receiving two pairs of trunnions (11' 12') extending radially outwardly from their respective shafts (11, 12). The inner ring (10) may comprise two or more elastic and/or other non-metallic elements.

fig-2

EP 0 321 022 A1

## Coupling

The invention concerns a coupling for coupling two generally shaft-like elements in such manner that a rotation moment can be transferred from one element to the other whereby the cardioids of these elements may form different angles with one another, in particular for application in the steering column of a vehicle, including an intermediate element which is generally annular or shaped as an endless piece and which is connected to two swivable coupling elements each of which is in turn connected - or can be connected -to a shaft-like element of the type involved herein and each of which includes two gudgeon pieces constituting essentially fixed parts of the coupling element which project - inside the annular intermediate element - radially outward relative to the cardioid of the coupling element and which are located in each other's extension, which gudgeon pieces can rotate at least around their cardioids while being contained in a recess cut from the inside in the annular intermediate element, all in such manner that the one coupling element can swivel in one plane and the other coupling element can swivel in a plane perpendicular to the first relative to the intermediate element. A similar coupling is known from the French patent no. 1538609.

In the known coupling each of the gudgeon pieces is formed by a cylindrical extension contained in an equally cylindrical recess in the annular intermediate element, whereby the intermediate element is cast by means of a mold around the four cylindrical gudgeon pieces.

The disadvantage of the known coupling is that the smallest angle in deviation of 180° which the cardioids of the shaft-like elements interconnected through the coupling may form with each other is too limited for application of the coupling in the steering column of a vehicle. In addition, the manufacture of the coupling - involving the use of a mold - is cumbersome and expensive.

From the German patent 091739, a coupling of the type under consideration is known but it includes, however, provisions allowing for possible changes in the length of the shaft-like elements. For this purpose, the gudgeon pieces have been executed in a spherical shape and are contained in cavities limited by a spherical plane in cylindrical sliding pieces which can slide back and forth inside cylindrical bores in the annular intermediate element whereby, in addition, the gudgeon pieces have been formed at one end of generally rectangular arms whose other end is connected in a rotating fashion to the remaining part of the coupling element involved.

The object of the invention is to provide an improved coupling of the type mentioned at the beginning.

This object is attained due to the fact that in the coupling according to the invention the annular intermediate element includes at least two parts located one inside the other - which parts form essentially an inner and an outer ring - whereby, preferably, the inner ring consists of a number of parts. In a coupling executed in this manner according to the invention, the smallest angle - as referred to above - may amount to 80°, i.e., each shaft-like element can swivel - relative to the cardioids extending along one line of both shaft-like elements -over an angle area of 0 to 50°, i.e., an angle area more than sufficient for application in a steering column. In addition, the coupling can be manufactured in a simple manner, in essence by first building the annular intermediate element followed by pressing the gudgeon pieces of the coupling elements into the recesses of the intermediate element. Moreover, the inner ring may be made of a nonferrous metal.

In order to obtain an outer ring with optimum torsion rigidity the outer ring is equipped with inwardly projecting elements located between the recesses of the inner ring whereby, for the absorption of vibrations the inner ring, in an advantageous embodiment, consists of at least four parts made of a relatively flexible material, each including a recess and each contained between two of the aforementioned projecting elements of the outer ring.

Preferably, the edges of the outer ring will be folded around the inner ring so that notwithstanding any wear and tear or even the complete elimination of the inner ring, the gudgeon pieces transferring the torque will remain in the outer ring which means that transfer of the torque - though noticeably defective - remains possible so that a worn coupling can be replaced in due time before it causes any accident.

Preferably at least one of the coupling elements will consist of an essentially solid shaft-like part at one end of which two spherical gudgeon pieces have been formed, and whose other end is equipped with means for attachment.

Thanks to the spherical gudgeon pieces, the attachment of a coupling according to the invention does not affect - on account of deformation - the centering of the gudgeon pieces within the annular intermediate element.

The solid shaft-like part may also consist of two parts adjoining one another with their flat sides, each constituting the axial half of a cylinder, which parts are kept against one another by means of a sleeve-like element fitted around them and each of which forming essentially one unit with a spherical gudgeon piece, so that the sleeve-like element can also serve as a means for attachment.

At least one of the coupling elements may also consist of a solid bent part whose ends are formed by two of the aforementioned diametrically opposed spherical gudgeon pieces and a generally sleeve-like part welded to the bent part by one of its top faces at a place in the center between the gudgeon pieces, and at their convex sides.

The invention is described in greater detail with reference to the drawing in which:

Figure 1 represents a steering column for a vehicle which includes two couplings according to the invention,

Figure 2 represents two forms of execution in axial cross-section of a coupling according to the invention,

Figure 3 represents a cross-sectional view along the line III-III in Figure 2,

Figure 4 represents a cross-sectional view along the line IV-IV in Figure 2,

Figure 5 represents a cross-sectional view along the line V-V in Figure 2.

Figure 6 represents a cross-sectional view along the line VI-IV in Figure 2, whereby this cross-section is a variation of the form of execution shown in cross-section in Figure 4.

Figure 7 shows an axial cross-sectional view of a fourth form of execution of the coupling according to the invention,

Figure 8 shows a fifth form of execution and

Figure 9 shows a sixth form of execution of the coupling according to the invention.

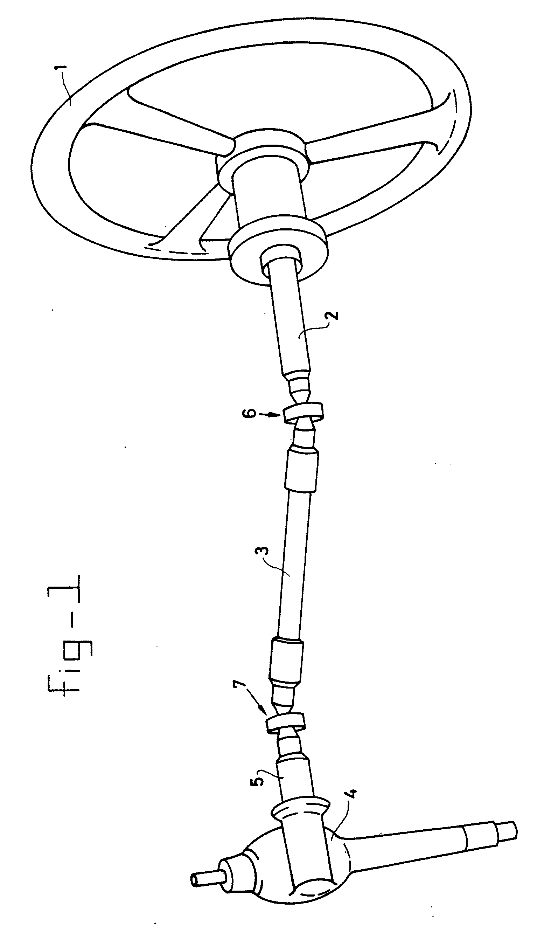

As shown in Figure 1, the steering column includes a part 2 linked to the steering wheel 1, an intermediate shaft 3 and a shaft 5 linked to the steering box. By means of the coupling 6, part 2 is connected to the intermediate shaft 3 and the intermediate shaft 3 is connected to the shaft 5 of the steering box by means of the coupling 7.

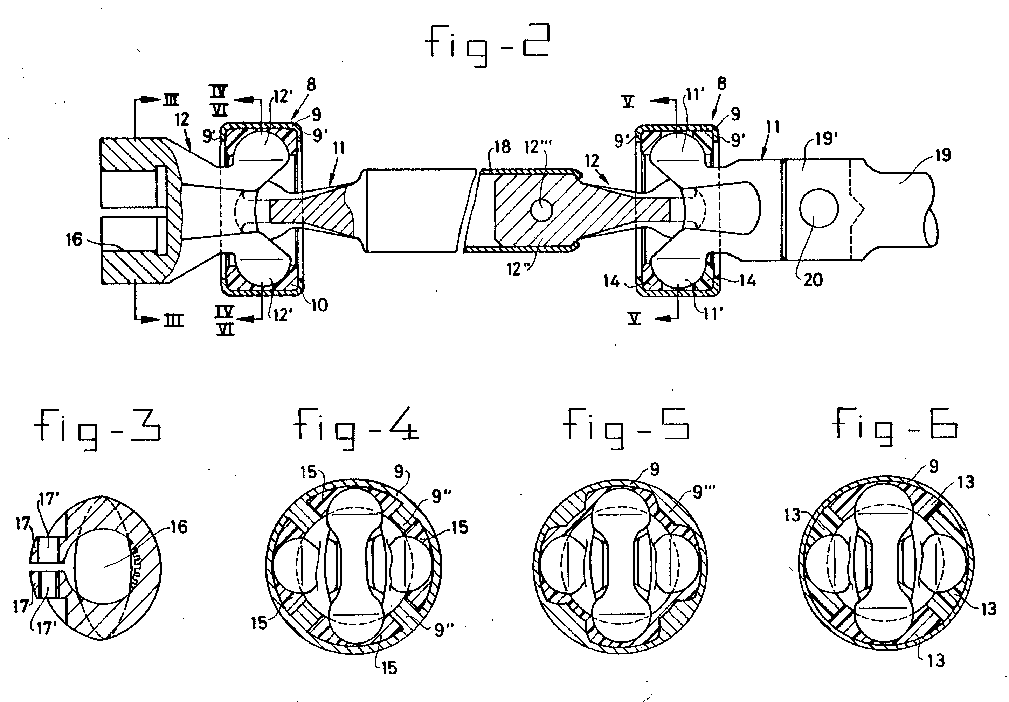

All the forms of execution of the coupling according to the invention shown in Figures 2 through 9 include an annular intermediate element 8 consisting of an outer ring 9 and an inner ring 10, whereby the edges 9' of the outer ring are folded around the inner ring 10, and two coupling elements 11, 12, which are each equipped with a pair of radially outward projecting spherical gudgeon pieces 12' and 11', contained in recesses formed within the inner ring 10 and located at a 90° angle from one another.

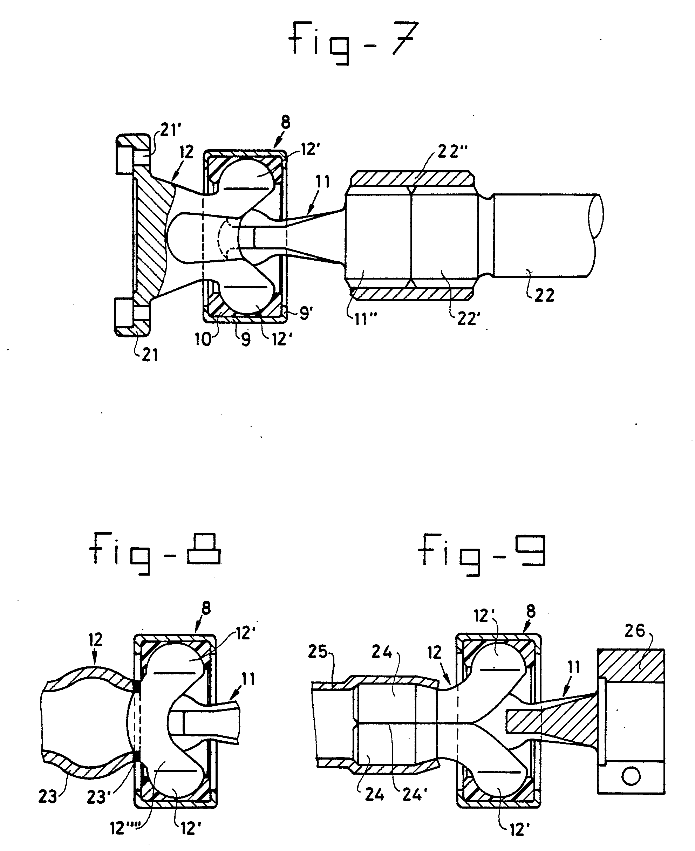

Figure 6 shows that the inner ring 10 may consist of four axial segments 13, while Figure 5 and Figure 2 to the right indicate that the inner ring 10 may consist of two annular parts 14. The cross-sectional view of Figure 5 shows furthermore that the outer ring 9 may have inwardly projecting parts 9''', which increases the torsion rigidity of the outer ring 9.

In the form of execution shown in Figure 4, the inner ring 10 consists again of four axial segments 15, now contained each time between two extensions 9'' of the outer ring 9 which means - considering that the segments 15 are made of a relatively flexible synthetic material - that the coupling is more vibration-free.

As shown in Figure 2, the coupling elements 11 and 12 are formed by an essentially solid shaft-like part at one end of which the spherical gudgeon pieces 11' and 12' have been formed.

Figure 2 to the left and Figure 3 show a cross-sectional view of the coupling element 12 with a split bore 16 equipped with teeth on the inside and, furthermore, with flange-shaped extensions 17 with an opening 17' so that a shaft-like element can be slid into the bore 16 and be fastened inside by inserting a screw through the openings 17' and screwing a bolt to it.

In the center of Figure 2, the coupling element 12 has two flattened sides 12'' facing one another and a cylindrical sleeve 18 is closely molded around this part with the flattened sides, and connected to it by means of a connector inserted through the continuous opening 12'''.

In Figure 2 to the right the free end of the coupling element 11 is rectangular in section and contained in the fork-shaped extremity 19' of a shaft-like element 19 whereby, through the continuous opening 20, a bolt is inserted to which a nut must be fastened to achieve a sturdy connection between the coupling element 11 and the shaft-like element 19.

In Figure 7 the coupling element 12 of the coupling 8 ends in a flange part 21 with openings 21' for attaching the coupling element 12 to an appropriately fitting element, whereby bolts are inserted in the openings 21'. The free end 11' of the coupling element 11 in Figure 7 is executed as a cylinder and connected with the cylindrical end 22' of a shaft-like element 22 by means of a sleeve 22' fitted around the parts 11' and 21'.

In Figure 8 the coupling element 12 consists of a solid bent part 12'''' whose extremities are formed by the spherical gudgeon pieces 12' and a sleeve-like part 23 which is welded at 23' with one of its top faces to the bent part 12'''.

In the form of execution shown in Figure 9, the coupling element 12 consists of two identical parts 24 which adjoin one another with their flat sides 24' and are kept against one another by the sleeve 25 fitted around them. The coupling element 11 in Figure 9 ends in a split ring 26 for the fastening of a shaft-like element.

## Claims

1. Coupling for coupling two generally shaft-like elements in such manner that a rotation moment can be transferred by one element to the other whereby the cardioids of these elements may form different angles with one another, in particular for application in the steering column of a vehicle, including an intermediate element which is generally annular or shaped as an endless piece and which is connected to two swivable coupling elements each of which is in turn connected - or can be connected - to a shaft-like element of the type involved herein and each of which includes two gudgeon pieces constituting essentially fixed parts of the coupling element which project - inside the annular intermediate element -radially outward relative to the cardioid of the coupling element and which are located in each other's extension, which gudgeon pieces can rotate at least around their cardioids while being contained in a recess cut from the inside in the annular intermediate element, all in such manner that the one coupling element can swivel in one plane and the other coupling element can swivel in a plane perpendicular to the first relative to the intermediate element, characterized by the fact that the annular intermediate element (8) includes at least two parts located one inside the other, forming essentially an outer (9) and an inner (10) ring.

2. Coupling according to Claim 1, characterized by the fact that the inner ring (10) consists of a number of parts (13, 14, 15).

3. Coupling according to Claims 1 or 2, characterized by the fact that the inner ring is made of a nonferrous metal.

4. Coupling according to Claims 1 through 3, characterized by the fact that the outer ring (9) is equipped with elements (9', 9'') projecting inwardly between the recesses of the inner ring (10).

5. Coupling according to Claim 4, characterized by the fact that the inner ring consists of at least four parts (15) made of a relatively flexible material, each including a recess and each contained between two of the projecting elements (9'') of the outer ring (9).

6. Coupling according to Claims 1 through 5, characterized by the fact that the edges (9'') of the outer ring have been folded around the inner ring (10).

7. Coupling according to Claims 1 through 6, characterized by the fact that at least one of the coupling elements (11, 12) is formed by an essentially solid shaft-like part at one end of which two spherical gudgeon pieces (11', 12') have been formed and whose other end is equipped with means for attachment.

8. Coupling according to Claim 7, characterized by the fact that the solid shaft-like part consists of two parts adjoining one another with their flat sides (24'), each forming the axial half of a cylinder (24), which parts are kept against one another by means of a sleeve-like element (25) fitted around them, and essentially constitute one unit with a spherical gudgeon piece (12').

9. Coupling according to Claims 1 through 6, characterized by the fact that at least one of the coupling elements is formed by a solid bent part (12'''') whose extremities are formed by two spherical gudgeon pieces (12') diametrically opposed to one another, and a generally sleeve-like part (23) welded with one its top faces to the bent part at a place in the center of the gudgeon pieces and at their convex sides.

Fig-1

EP 0 321 022 A1

fig-2

fig-3

fig-4

fig-5

fig-6

# Fig-7

# Fig-8

# Fig-9

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-1 538 608 (GLAENZER SPICER) <br> * Whole document * | 1-3,6 | F 16 D 3/42 <br> F 16 D 3/28 <br> B 62 D 1/16 |
| Y | --- | 5 | |
| X | FR-A-2 176 214 (INA-ROULEMENTS) <br> * Whole document * | 1,2,4,6 | |
| Y | --- | 5 | |
| X | FR-A-2 343 925 (MICHIEL) <br> * Whole document * <br> --- | 1,2,4-6 | |
| X | GB-A- 583 296 (B.S.A.) <br> * Whole document * | 1,2,4,6 ,7 | |
| Y | | 8 | |
| A | --- | 5 | |
| Y | DE-C- 352 691 (LOEWE) <br> * Whole document * <br> --- | 8 | |
| X | US-A-1 861 753 (PETERS) <br> * Whole document * | 1,2,4,5 | |
| A | --- | 6 | |
| X | US-A-1 913 783 (WILLIAMS) <br> * Whole document * <br> --- | 1,2,6 | |
| X | GB-A- 200 883 (AUSTIN) <br> * Whole document * <br> --- | 1,2 | |
| X | FR-A-1 003 671 (PAULIN) <br> * Whole document * <br> ---       -/- | 1,2 | |

TECHNICAL FIELDS
SEARCHED (Int. Cl.4)

F 16 D 3/00

The present search report has been drawn up for all claims

| Place of search | Date of completion of the search | Examiner |
|---|---|---|
| THE HAGUE | 10-03-1989 | BALDWIN D.R. |

EPO FORM 1503 03.82 (P0401)

European Patent Office

**EUROPEAN SEARCH REPORT**

Application Number

EP 88 20 2780

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | FR-A- 322 048 (POLLAK) <br> * Whole document * <br> --- | 1,2 | |
| X | FR-A-2 376 968 (CHAUVIERRE) <br> * Whole document * <br> --- | 1,2 | |
| X | FR-A-1 044 902 (CARDONA) <br> * Whole document * | 1,6 | |
| A | <br> --- | 7 | |
| E | EP-A-0 273 501 (SKF INDUSTRIAL) <br> * Column 4; figure 9 * <br> ----- | 1,6,7 | |

TECHNICAL FIELDS SEARCHED (Int. Cl.4)

The present search report has been drawn up for all claims

| Place of search | Date of completion of the search | Examiner |
|---|---|---|
| THE HAGUE | 10-03-1989 | BALDWIN D.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)